Europäisches Patentamt

European Patent Office

Office européen des brevets

(11) Publication number: **0 186 477**
**B1**

(12) **EUROPEAN PATENT SPECIFICATION**

(45) Date of publication of patent specification: **07.11.90**

(21) Application number: **85309366.4**

(22) Date of filing: **20.12.85**

(51) Int. Cl.⁵: **F 24 F 3/12**

(54) **Environmental control systems.**

(30) Priority: **21.12.84 US 684660**

(43) Date of publication of application:
**02.07.86 Bulletin 86/27**

(45) Publication of the grant of the patent:
**07.11.90 Bulletin 90/45**

(84) Designated Contracting States:
**DE FR GB**

(56) References cited:
**DE-A-2 043 461**
**US-A-2 980 494**
**US-A-3 404 538**
**US-A-3 819 334**

(73) Proprietor: **ALLIED-SIGNAL INC. (a Delaware corporation)**
**Columbia Road and Park Avenue P.O. Box 2245R**
**Morristown New Jersey 07960 (US)**

(72) Inventor: **Limberg, Gilbert E.**
**27059 Silver Moon Lane**
**Rancho Palos Verdes California 90274 (US)**
Inventor: **Kinsell, Robert C.**
**2100 Westridge Road**
**Los Angeles California 90049 (US)**

(74) Representative: **Rees, David Christopher et al**
**Kilburn & Strode 30 John Street**
**London WC1N 2DD (GB)**

Courier Press, Leamington Spa, England.

## Description

This invention pertains to environmental control systems and more particularly to such systems for providing conditioned air to the cabin within an aircraft.

Environmental control systems for aircraft and other vehicles are utilized to provide a conditioned airflow for passenger and crew within the aircraft. The environmental control system typically receives a flow of compressed, warm air from a pressurized air source on the aircraft, and cools, dehumidifies and removes certain deleterious contaminants from the airflow. Such a system is shown for example in US-A-3404538.

Weight, economy, and ruggedness of operation are important criteria in such systems. Particularly in aircrft, one function of the environmental system is to remove or reduce the amount of ozone contained within the airflow. It is an object of the invention to provide a system for ozone removal in which the additional weight and/or space required to accomplish this function is minimised.

According to the present invention, there is provided a vehicular environmental control system for conditioning a relatively warm airflow for delivery to a space within the vehicle comprising an air inlet for relatively warm air, a source of cooling fluid, a primary heat exchanger having hot pass passageways arranged to receive the warm air in heat exchange relationship with cool pass passageways the cooling fluid, and a rotary compressor receiving the cooled air from the primary heat exchanger and a rotary turbine expander receiving air from the rotary compressor, the rotary compressor and rotary turbine expander preferably being operatively coupled, characterised by an ozone decomposition catalyst on the surfaces of the hot pass passageways exposed to the warm air, and by a secondary heat exchanger arranged to cool air from the primary heat exchanger prior to its being transferred to the rotary compressor.

Thus the present invention envisages incorporating an ozone decomposition catalyst directly upon the heat exchange surfaces of the hot side of the first heat exchanger of the environmental control system, which receives the airflow in its warmest stage.

The invention may be carried into practice in various ways, but one specific embodiment will now be described, by way of example, with reference to the accompanying drawings, in which:

Figure 1 is a schematic diagram of an environmental control system constructed in accordance with the principles of the present invention; and

Figure 2 is a partial, diagrammatic perspective view of the heat exchanger 18 of the system of Figure 1.

The drawings show an environmental control system 10 which may be of the type utilized in aircraft, tanks or other vehicles. The vehicle (not shown) receives ambient air from an inlet 12 extending to a compressed air source 14 which may be the engine on the vehicle. The environmental control system 10 receives a pressurized, relatively warm airflow from the air source 14 or engine via an inlet duct 16 which directs the incoming warm airflow to the hot pass side of a primary heat exchanger 18. To cool the relatively warm airflow, the primary heat exchanger 18 has a heat sink in the form of a relatively cool airflow (such as ambient air in the instance of an aircraft) received from a cooling fluid passage 24, and a subpassage 24a associated therewith.

After the cooling interchange with the heat sink airflow in the primary heat exchanger 18, the airflow from the duct 16 is directed through a first passage 20 to a second heat exchanger 22. The heat exchanger 22 is similar to the primary heat exchanger and also receives a cooling airflow from the passage 24 via a subpassage 24b. The exhaust of the cooler airflow from the second heat exchanger 22 passes through a further passage 26 to the inlet of a rotary compressor 28. Pressurized airflow is exhausted from compressor 28 through a passage 30 to a third heat exchanger 32. Again, the third heat exchanger 32 receives a heat sink flow of cooling flow from the passage 24 which is ultimately exhausted via a subpassage 24c. The third heat exchanger 32 operates to remove all, or at least a portion of, the heat of compression in the airflow introduced by the compressor 28. The exhaust of airflow from the third heat exchanger 32 passes through a passage 34 to the inlet of a rotary turbine expander 36.

The rotary turbine expander 36 is driven by the airflow from the passage 34 to expand and significantly cool the airflow therethrough prior to its exhaust through an outlet passage 38, from whence it is ultimately directed to the cabin of the aircraft or other vehicle. The rotary turbine expander 36 is connected, via a shaft 40, directly to drive the compressor 28 in a known bootstrap fashion.

For control of the temperature of the airflow in the outlet passage 38, a temperature control bypass passage 42 is included which extends from the first passage 20 to the outlet passage 38. A control valve 44 controls the volume of relatively warm airflow in the temperature control bypass passage 42 under the control of a control system 46. The volume of flow permitted through the temperature control bypass passage 42 will ultimately determine the temperature of the air being delivered through the outlet passage 38 to the cabin.

Various other heat exchangers, dehumidifiers, water traps, condensers, and/or other elements may be incorporated in the environmental control system 10.

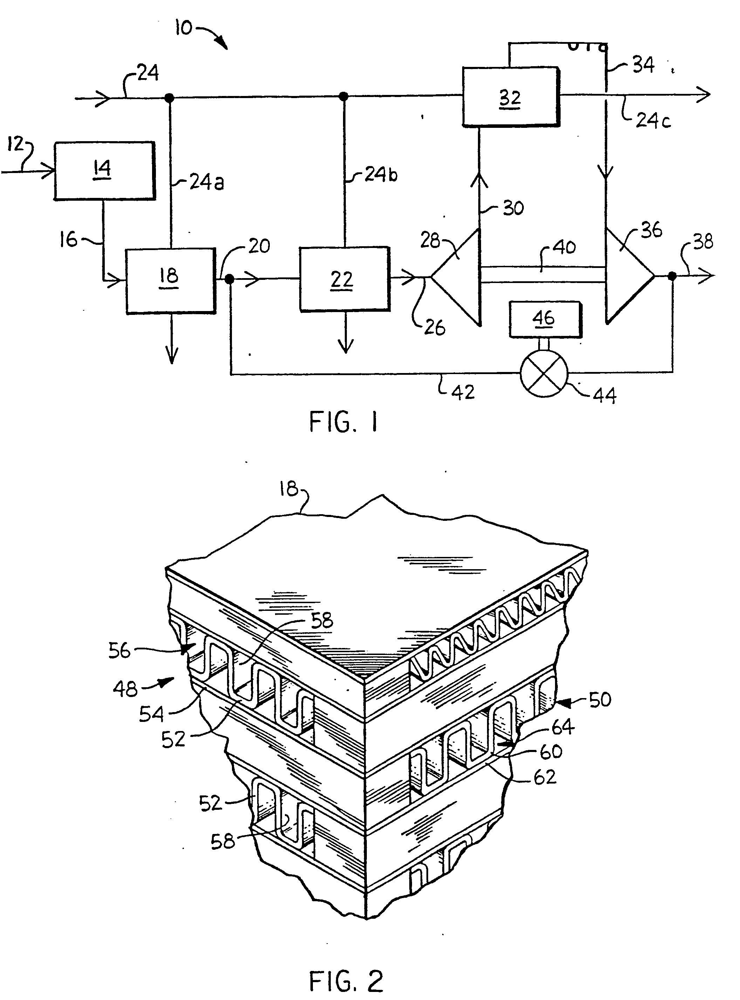

Internal details of the construction of the core of primary heat exchanger 18 are illustrated in Figure 2. More particularly, the core of primary heat exchanger 18 is of the plate-fin construction with crossflow of the warm and cool fluids being passed therethrough. Specifically, the heat exchanger 18 incorporates a hot pass side 48 which receives the relatively warm airflow from the inlet duct 16. A cool pass side 50 receives the relatively cool fluid flow from subpassage 24a.

The hot pass side 48, being of plate fin construction, includes a plurality of rows of fin elements 52, sandwiched between plate elements 54 on the top and bottom thereof, to define a plurality of hot pass passages 56 therebetween through which the airflow from inlet duct 16 passes. The cool pass side 50 of the heat exchanger similarly includes a plurality of fin elements 60 between associated plate elements 62 to define a plurality of cool pass passages 64 through which the cooling fluid from the subpassage 24a passes. As will be evident from Figure 2 the hot pass fin elements 52 and cool pass fin elements 60 are sandwiched between one another and arranged in crossflow configuration such that the fluid flowing through the hot pass passages 56 is at right angles to the fluid flowing through the cool pass passages 64. It will also be appreciated that the plate elements 54 and 62 may be one and the same, i.e. only a single plate element may be required between adjacent hot pass and cold pass fin elements.

Upon the surfaces of the fin elements 52 and the plate elements 54 of the hot pass side which are exposed to the hot pass passages 56, is a coating 58 for decomposing ozone in the relatively warm airflow. An example of ozone decomposition catalyst for the coating 58 is one including platinum and a base metal. Such catalyst materials are well known in the art and are discussed generally in various references such as U.S. Patent Nos 4,405,507, 4,206,083; and 4,173,549. When deposited upon the surfaces of elements 52,54, which are preferably of a metallic material conducive to heat transfer such as inconel, steel or aluminum including alloys thereof, the coating 58 is sufficient in amount and deposited over sufficient surface area effectively to decompose the ozone in the warm airflow which is at the order of about 100-150°F (38-66°C) or more. At the same time, however, it has been found that the coating 58 does not alter the heat exchange function and operation beyond acceptable limits.

In operation, the relatively warm airflow from the inlet duct 16 passes through the hot pass passages 56 to accomplish first stage cooling of the airflow. At the same time the ozone composition catalyst 58 operates to decompose, reduce and/or eliminate the ozone in the airflow. Preferably the ozone decomposition catalyst 58 is included in the precooler or primary heat exchanger 18 which carries the conditioned airflow in its warmest state, inasmuch as the efficiency of the ozone decomposition catalyst is improved with higher temperatures, but similar provision may be made in the hot pass passages of other heat exchangers, such as the heat exchangers 22 and/or 32. Thus ozone decomposition is accomplished without adding any space requirements to the environmental control system, and with minimum weight addition, i.e.,

only the weight of the ozone catalyst per se is added to the system.

## Claims

1. A vehicular environmental control system for conditioning a relatively warm airflow for delivery to a space within the vehicle comprising an air inlet (12) for relatively warm air, a source of cooling fluid (24), a primary heat exchanger (18) having hot pass passageways (56) arranged to receive the warm air in heat exchange relationship with cool pass passageways (64) the cooling fluid, and a rotary compressor (28) receiving the cooled air from the primary heat exchanger (18) and a rotary turbine expander (36) receiving air from the rotary compressor (28), the rotary compressor (28) and rotary turbine expander preferably being operatively coupled, characterised by an ozone decomposition catalyst (58) on the surfaces of the hot pass passageways (56) exposed to the warm air, and by a secondary heat exchanger (22) arranged to cool air from the primary heat exchanger (18) prior to its being transferred to the rotary compressor (28).

2. A system as claimed in Claim 1, characterised in that the hot pass/passageways (56) and cool pass passageways (64) respectively define a hot pass core and cool pass core.

3. A system as claimed in Claim 1 or Claim 2, characterised in that the primary heat exchanger (18) is a cross-flow plate-fin type heat exchanger.

4. A system as claimed in any preceding claim characterised by a compressor (14) delivering air to the primary heat exchanger, the compressor (14) optionally being the vehicle engine.

5. A system as claimed in any preceding claim, characterised by a third heat exchanger (32) arranged to cool the air between the rotary compressor (28) and the rotary expander (36).

6. A system as claimed in Claim 5, characterised by an air bypass line (42) by-passing the second and third heat exchangers (22, 32) and also the rotary compressor and expander (28, 36), the line (42) including a valve (44) to control the amount of air in the line (42) to adjust the temperature of the cooled air (28) downstream of the expander (32).

7. A system as claimed in any preceding claim, characterised in that the catalyst is a platinum alloy.

8. An aircraft incorporating a control system (10) as claimed in any preceding claim, the warm air (16) supplied to the primary heat exchanger (18) being compressed environmental air (12), the cooling fluid (24) being ambient air, and the cooled air leave sytem (10) being delivered to the aircraft cabin.

## Patentansprüche

1. Steuerungsanlage für die Umgebungsatmosphäre bei Fahrzeugen zum Konditionieren eines verhältnismäßig warmen Luftstromes für die Abgabe in einen Raum innerhalb des Fahrzeuges, mit einem Lufteinlaß (12) für verhältnismäßig warme Luft, einer Kühlmittelquelle (24), einem primären Wärmetauscher (18) der Heißdurchströmkanäle (56) aufweist, die so angeordnet sind, daß sie die warme Luft in Wärmeaustauschbeziehung mit den Kühldurchströmkanälen (64) des Kühlmediums aufnehmen, und mit einem Drehkompressor (28), der die gekühlte Luft aus dem primären Wärmetauscher (18) aufnimmt, sowie einer Drehturbinenexpansionsvorrichtung (36), die Luft aus dem Drehkompressor (28) aufnimmt, wobei der Drehkompressor (28) und die Drehturbinenexpansionsvorrichtung vorzugsweise miteinander gekoppelt sind,

gekennzeichnet durch einen Ozonzerlegungskatalysator (58) auf den Oberflächen der Heißdurchströmkanäle (56), die der Warmluft ausgesetzt sind, und durch einen sekundären Wärmetauscher (22), der so angeordnet ist, daß er Luft aus dem primären Wärmetauscher (18) kühlt, bevor diese in den Drehkompressor (28) übertragen wird.

2. Steuerungsanlage nach Anspruch 1, dadurch gekennzeichnet, daß die Heißdurchströmkanäle (56) und die Kühldurchströmkanäle (64) einen Heißdurchlaßkern und einen Kühldurchlaßkern festlegen.

3. Steuerungsanlage nach Anspruch 1 oder 2, dadurch gekennzeichnet, daß der primäre Wärmetauscher (18) ein Querdurchström-Platten-Rippen-Wärmetauscher ist.

4. Steuerungsanlage nach eienm der Ansprüche 1—3 gekennzeichnet durch einen Kompressor (14), der Luft in den primären Wärmetauscher abgibt und der wahlweise der Fahrzeugantriebsmotor ist.

5. Steuerungsanlage nach einem der Ansprüche 1—4, gekennzeichnet durch einen dritten Wärmetauscher (32), der so angeordnet ist, daß er die Luft zwischen dem Drehkompressor (28) und der Drehexpansionsvorrichtung (36) kühlt.

6. Steuerungsanlage nach Anspruch 5, gekennzeichnet durch eine Luftbypaßleitung (42), die den zweiten und dritten Wärmetauscher (22, 32) sowie den Drehkompressor und die Drehexpansionsvorrichtung (28, 36) in Nebenschluß legt, wobei die Leitung (42) ein Ventil (44) zur Steuerung der Luftmenge in der Leitung (42) aufweist, um die Temperatur der gekühlten Luft (28) stromabwärts in Bezug auf die Expansionsvorrichtung (32) einzustellen.

7. Steuerungsanlage nach einem der Ansprüche 1—6, dadurch gekennzeichnet, daß der Katalysator eine Platinlegierung aufweist.

8. Flugzeug mit einer Steuerungsanlage (10) nach einem der Ansprüche 1—7, bei der die Warmluft (16), die in den primären Wärmetauscher (18) eingespeist wird, komprimierte Luft (12) der Umgebungsatmosphäre ist, das Kühlmedium (24) Umgebungsluft ist, und die gekühlte Luft, die die Anlage (10) verläßt, in die Flugzeugkabine abgegeben wird.

**Revendications**

1. Dispositif de réglage d'ambiance de véhicule pour conditionner un flux d'air relativement chaud à distribuer dans un espace à l'intérieur du véhicule, comprenant une entrée d'air (12) pour de l'air relativement chaud, une source de fluide de refroidissement (24), un échangeur de chaleur principal (18) comportant des passages de circuit chaud (56) agencés pour recevoir l'air chaud en relation d'échange de chaleur avec des passages de circuit froid (64) pour le fluide de refroidissement, et un compresseur rotatif (28) recevant l'air refroidi de l'échangeur de chaleur principal (18) et un détendeur à turbine rotative (36) recevant l'air du compresseur rotatif (28), le compresseur rotatif (28) et le détendeur à turbine rotative étant de préférence accouplés en fonctionnement, caractérisé par un catalyseur de décomposition de l'ozone (58) appliqué sur les surfaces des passages de circuit chaud (56) exposées à l'air chaud, et par un échangeur de chaleur secondaire (22) agencé pour refroidir l'air venant de l'échangeur de chaleur principal (18) avant son transfert au compresseur rotatif (28).

2. Dispositif suivant la revendication 1, caractérisé en ce que les passages du circuit chaud (56) et les passages du circuit froid (64) définissent respectivement un noyau de circuit chaud et un noyau de circuit froid.

3. Dispositif suivant la revendication 1 ou la revendication 2, caractérisé en ce que l'échangeur de chaleur principal (18) est un échangeur de chaleur du type à plaques et ailettes à courants croisés.

4. Dispositif suivant l'une quelconque des revendications précédentes, caractérisé par un compresseur (14) fournissant l'air à l'échangeur de chaleur principal, le compresseur (14) étant optionnellement le moteur du véhicule.

5. Dispositif suivant l'une quelconque des revendications précédentes, caractérisé par un troisième échangeur de chaleur (32) agencé pour refroidir l'air entre le compresseur rotatif (28) et le détendeur rotatif (36).

6. Dispositif suivant la revendication 5, caractérisé par un conduit de bypass d'air (42) contournant les deuxième et troisième échangeurs de chaleur (22, 32) et également le compresseur et le détendeur rotatifs (28, 36), le conduit (42) comportant une vanne (44) pour régler le débit d'air dans le conduit (42) de manière à ajuster la température de l'air refroidi (28) en aval du détendeur (32).

7. Dispositif suivant l'une quelconque des revendications précédentes, caractérisé en ce que le catalyseur est un alliage de platine.

8. Aéronef comportant un dispositif de réglage (10) suivant l'une quelconque des revendications précédentes, l'air chaud (16) amené à l'échangeur de chaleur principal (18) étant de l'air ambiant comprimé (12), le fluide de refroidissement (24) étant de l'air ambiant, et l'air refroidi sortant du dispositif (10) étant envoyé à la cabine de l'aéronef.

FIG. I

FIG. 2

1